# EUROPÄISCHE PATENTSCHRIFT

(11) **EP 0 652 704 B1**
(45) Veröffentlichungstag und Bekanntmachung des Hinweises auf die Patenterteilung: **29.01.1997**
(21) Anmeldenummer: 93917655.8
(22) Anmeldetag: 26.07.1993
(51) Int. Cl.: A01N 37/36

(54) **VERWENDUNG VON ETHERCARBONSÄUREN ALS KEIMTÖTENDE SUBSTANZEN**
USE OF ETHER CARBOXYLIC ACIDS AS DISINFECTANTS
UTILISATION D'ACIDES CARBOXYLIQUES ETHERIQUES COMME SUBSTANCES GERMICIDES

(30) Priorität: 03.08.1992 DE 4225626
(43) Veröffentlichungstag der Anmeldung: 17.05.1995
(73) Patentinhaber: Henkel Kommanditgesellschaft auf Aktien, 40191 Düsseldorf (DE)
(72) Erfinder: BRAGULLA, Siegfried, D-40789 Monheim (DE); GROSSE BÖWING, Walter, D-41541 Dormagen (DE); MELTZ, Klaus-Dieter, D-40880 Ratingen (DE)
(86) Internationale Anmeldenummer: EP9301987
(87) Internationale Veröffentlichungsnummer: WO9403060

(56) Entgegenhaltungen:
- EP-A- 0 102 118
- EP-A- 0 268 873
- DE-A- 856 042
- GB-A- 2 088 863
- S.S.BLOCK 'Disinfection, Sterilization, and Preservation' 1991 , LEA&FEBIGER , PHILADELPHIA, US Kapitel 14, G.R.DYCHDALA et al. 'SURFACE-ACTIVE AGENTS: ACID-ANIONIC COMPOUNDS', Seiten 256-262 siehe das ganze Dokument
- DATABASE WPI Week 9042, Derwent Publications Ltd., London, GB; AN 90-316666(42) & JP,A,2 225 404 (SHISEIDO) 7. September 1990
- DATABASE WPI Week 7240, Derwent Publications Ltd., London, GB; AN 72-64606T (40) & JP,B,47 039 337 (ADEKA ARGUS CHEMICAL)
- DATABASE CHEMABS CHEMICAL ABSTRACTS SERVICE, COLUMBUS, OHIO, US AN: CA113(16):135544c & JP,A,2 097 593 (DAISAN) 10. April 1990
- SEIFEN, OLE, FETTE, WACHSE Bd. 109, Nr. 13 , 11. August 1983 , AUGSBURG DE Seiten 353 - 355 N.A.I.PAASSEN 'Alkylethercarboxylate: Hautfreundliche Rohstoffe für kosmetische Anwendungen'
- DISINFECTION, STERILIZATION, AND PRESERVATION, 4. Auflage, 1991, Kapitel 14, Seiten 256-262, S.S. Block, Philadelphia, US
- DATABASE WPI Week 9042, Derwent Publications Ltd., London, GB, AN 90-316666(42)
- DATABASE WPI Week 7240, Derwent Publications Ltd., London, GB, AN 72-64606T(40)
- DATABASE CHEMABS, Columbus, Ohio, US, AN:CA113(16):135544c
- SEIFEN, OELE, FETTE, WACHSE Bd. 109, Nr. 13, 11. August 1983, Seiten 353-355, Augsburg, DE

## Beschreibung

Gegenstand der Erfindung ist die Verwendung von Ethercarbonsäuren als keimtötende Substanzen in wäßrigen sauren Medien.

Als Desinfektionswirkstoffe in sauren Medien sind bereits eine Reihe von Substanzen bekannt. Hierzu gehören u.a. quartäre Ammoniumverbindungen, Halogencarbonsäuren oder Jod oder anionaktive Tenside, die jedoch alle anwendungstechnische Nachteile aufweisen. So schäumen quartäre Ammoniumverbindungen so stark, daß sie einen Zusatz größerer Mengen Antischaummittel erfordern, der jedoch oft die Desinfektionswirkung beeinträchtigt und teilweise zu Rückstandsproblemen führt. Entsprechendes gilt für den Einsatz anionischer Tenside, obgleich ihre gute Entfettungswirkung von Nutzen wäre. Halogencarbonsäuren wie z.B. Jod-, Chlor- und Bromessigsäure führen in sauren Reinigern beispielsweise zum Ausfällen von Eiweiß, das sich als Belag auf den zu reinigenden Oberflächen niederschlägt oder innerhalb des Reinigungssystems die Spritzdüsen verstopfen kann. Zudem sind sie wegen mangelnder hydrolytischer Stabilität nur kalt einsetzbar und ihre Handhabung ist nicht ungefährlich, da sie stark ätzend wirken und auch eine relativ hohe Toxizität aufweisen, die sich nachteilig auf den Einsatz etwa in konfektionierten Reinigungsmitteln auswirkt.

Der Einsatz von Jod als Desinfektionskomponente in sauren Reinigermedien weist wiederum den Nachteil auf, daß die Anwendungstemperatur auf 30 - 35 °C begrenzt werden muß, damit das Jod nicht verdampft. Übliche Reinigungstemperaturen, insbesondere in CIP (Cleaning-in-Place)-Anlagen (vergleiche z.B. Seifen-Öle-Fett-Wachse 116 (1980) 611-616) liegen jedoch bei 60 bis 80 °C. Außerdem kann Jod zu allergischen Reaktionen führen. Phosphonsäuren, insbesondere Alkylphosphonsäuren wie Octylphosphonsäuren, sind ausgezeichnete Desinfektionskomponenten in sauren Reinigern, erfordern jedoch den Zusatz hydrophiler Tenside als Emulgator.

Aniontenside schäumen in sauren Reinigern stark und erfordern ebenso wie die quartären Ammoniumverbindungen den oft mit Problemen verbundenen Zusatz von Antischaummitteln. In stapelfähigen Anwendungslösungen für CIP-Systeme reagieren sie außerdem ebenfalls mit Eiweiß, was zu den erwähnten Ausfällungen und dadurch zu schmierigen Oberflächen führen kann. Ihr Ausspülverhalten ist schlecht und erfordert lange Spülzeiten.

Der vorliegenden Erfindung lag daher die Aufgabe zugrunde, einen Desinfektionswirkstoff zu ermitteln, der bei gutem bakteriologischem Spektrum in sauren Reinigern eine schnelle Tötung der Bakterien bewirkt. Gleichzeitig sollte der Wirkstoff toxikologisch und dermatologisch unbedenklich und außerdem mit anionaktiven, nichtionogenen und kationaktiven Tensiden mischbar sein ohne zu Schaumproblemen zu führen.

Die gestellte Aufgabe wurde gelöst durch die Verwendung von Ethercarbonsäuren der allgemeinen Formel

R-(OC₂H₄)ₙ-OCH₂COOH

in wäßrigen sauren Medien, wobei R etwa C₄₋₁₀ und n etwa 2 - 8 bedeuten.

Ethercarbonsäuren sind bekannte Verbindungen, die beispielsweise durch Umsetzung von Chloressigsäure mit Ethylenoxid beziehungsweise von ethoxylierten Alkanolen oder Phenolen mit Chloracetat oder von Epichlorhydrin mit Hydroxyessigsäure (vgl. z.B. Tenside Surf. Det. 29 (1992), 169 - 174) hergestellt werden können. Sie sind biologisch gut abbaubar und werden beispielsweise von der Fa. CHEM-Y unter der Bezeichnung AKYPO® angeboten. Bisher war lediglich bekannt, daß diese Verbindungen Tensidcharakter aufweisen und als Bestandteile von Wasch- und Reinigungsmitteln gelten können.

Die keimtötende Wirkung der genannten Ethercarbonsäuren tritt allein auf und verbessert sich noch in Verbindung mit anderen Desinfektionskomponenten wie quartären Ammonium- und/oder Phosphoniumverbindungen, wie z.B. Lauryldimethylbenzylammoniumchlorid, Cetyltrimethylammoniumchlorid, anionischen Tensiden wie z.B. Dodecylbenzolsulfonat, Natriumlaurylsulfat, Ammoniumlaurylsulfat, Alkylphosphonsäuren wie z.B. Octylphosphonsäure (vgl. EP 111 135), Aktivsauerstoff in Form von Wasserstoffperoxid, Natriumperborat oder Natrium bzw. Kaliummonoperoxosulfat in Zusammensetzungen auf Basis organischer oder anorganischer Säuren (Basissäure), wie Ameisen-, Essig-, oder Zitronensäure bzw. Salz-, Schwefel-, Phosphor- oder Amidosulfonsäure. Die Konzentration der Ethercarbonsäuren in den keimtötend wirkenden Zusammensetzungen beträgt etwa 0,05 bis 50, vorzugsweise etwa 1 bis 10 Gew.-%. Die Konzentration der Basissäure der Kompositionen liegt zwischen etwa 1 und 99, vorzugsweise zwischen etwa 50 und 90 Gew.-%. Beide Mengen können sich auf 100 Gew.-% ergänzen, wobei der Rest Wasser und/oder eine oder mehrere weitere Desinfektionskomponente sein kann. Der Anteil weiterer Desinfektionskomponenten kann etwa 0,05 bis 50 Gew.-%, vorzugsweise etwa 1 bis 10 Gew.-% betragen.

Die Tenside, mit denen die keimtötenden Ethercarbonsäuren gemeinsam verwendet werden können, können anionischer, nichtionischer, kationischer oder ampholytischer Beschaffenheit sein, wobei Dodecylbenzolsulfonate und Alkylphosphonsäuren hier ausgenommen sind. Es können auch Gemische verschiedener Tenside Anwendung finden. Zweckmäßigerweise werden jedoch im Hinblick auf eine überwiegend nur geringe Schaumentwicklung nichtionogene Tenside, insbesondere Anlagerungsprodukte von Ethylenoxid und/oder Propylenoxid an Fettalkohole, Fettamine oder Fettsäuren mit 12 bis 18 Kohlenstoffatomen oder Fettsäureestern von Polyolen, insbesondere von Zuckern wie Glucose, eingesetzt. Ihre Mengen betragen etwa 0,5 bis 20 Gew.-%, vorzugsweise etwa 1 bis 10 Gew.-%. Das Mischungsverhältnis in Gewichtsprozent von Ethercarbonsäuren zu nichtionischen Tensiden liegt zweckmäßig im Bereich von etwa 1 : 10 bis etwa 10 : 1, vorzugsweise von etwa 1 : 2 bis etwa 2 : 1.

Neben den Tensiden, die selbst auch eine hydrotrope Verbesserung der Löslichkeit der Ethercarbonsäuren bewirken, können gegebenenfalls noch geringe, von Fall zu Fall zu ermittelnde Mengen anderer Lösungsvermittler wie Cumolsulfonat und 1- oder 2-wertige kurzkettige Alkohole wie etwa Ethanol, Propanol, Glykol, Butyldiglykol zugesetzt werden.

Die erfindungsgemäß zur Anwendung gelangenden Ethercarbonsäuren können als keimtötende Substanzen überall dort eingesetzt werden, wo Oberflächen aus Metall oder Emaille, Glas oder Kunststoff desinfiziert werden sollen. Besonders vorteilhaft ist ihr Einsatz in CIP-Anlagen, d.h. stationäre Anlagen, bei denen im geschlossenen Kreislauf gearbeitet wird. Durch die nachstehenden Beispiele wird der Gegenstand der Erfindung erläutert. Dabei haben die angegebenen Abkürzungen folgende Bedeutung:
- A =: C₁₂₋₁₈-Fettalkohol + 8 EO
- B =: C₁₂₋₁₈-Fettalkohol + 6 EO
- C =: C₁₂₋₁₈-Fettalkohol EO-PO-Addukt
- D =: Natriumlaurylsulfat
- E =: Ammoniumlaurylsulfat
- F =: Dodecylbenzolsulfonat
- G =: Lauryldimethylbenzylammoniumchlorid
- H =: Cetyltrimetylammoniumchlorid
- I =: R(OC₂H₄)ₙOCH₂COOH mit R = C₈- n = 8
- K =: dto. mit R = C₈₋₈- n = 2
- L =: dto. mit R = C₄₋₈- n = 5
- M =: dto. mit R = C₆- n = 3
- EO =: Ethylenoxid
- PO =: Propylenoxid

Die Untersuchung der Keimreduktion erfolgte nach dem Europäischen Suspensionstest (EST), zu finden in "Test methods for the antimicrobiel activity of disinfctants in food hygiene", Council of Europe, Strasbourg 1987, 17-19.

Die Anwendungskonzentration der Ethercarbonsäuren in den wäßrigen sauren Medien liegt bei etwa 0,0005 - 5, vorzugsweise bei etwa 0,01 - 1 Gew.-%. Der Anteil an anorganischen oder organischen Säuren liegt dann bei etwa 0,1 - 20, vorzugsweise bei etwa 0,5 - 5 Gew.-%.

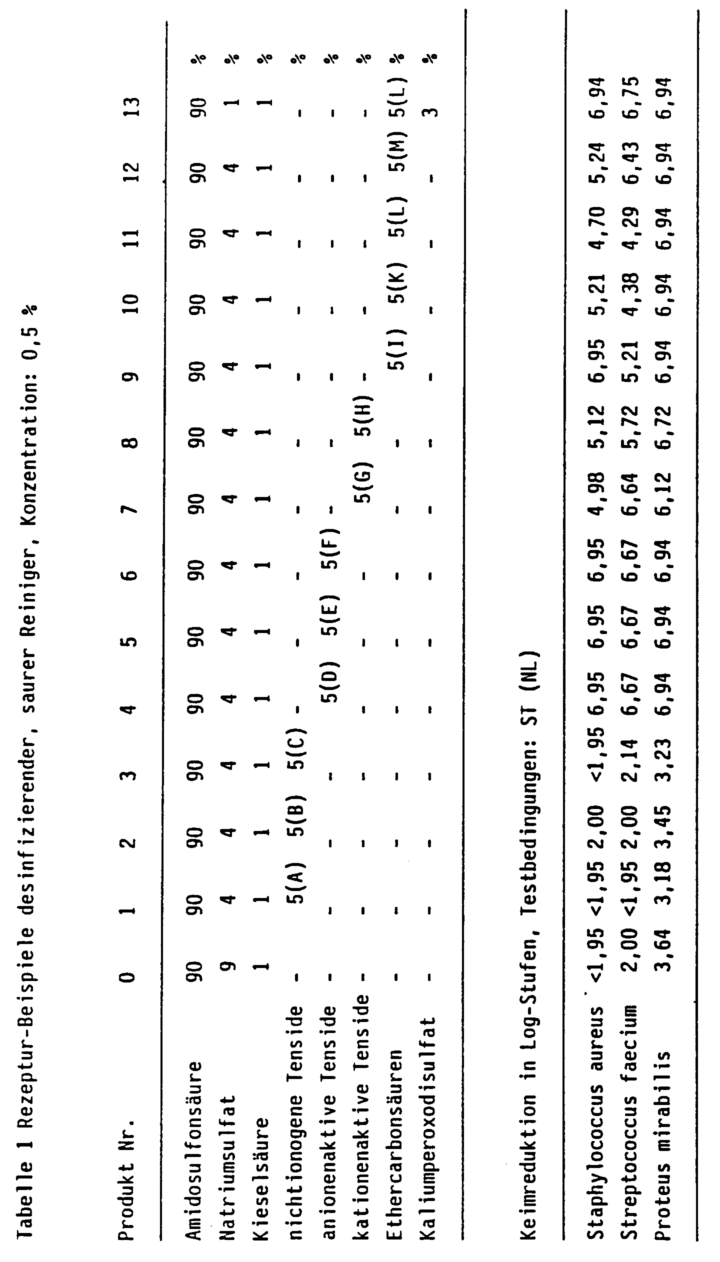

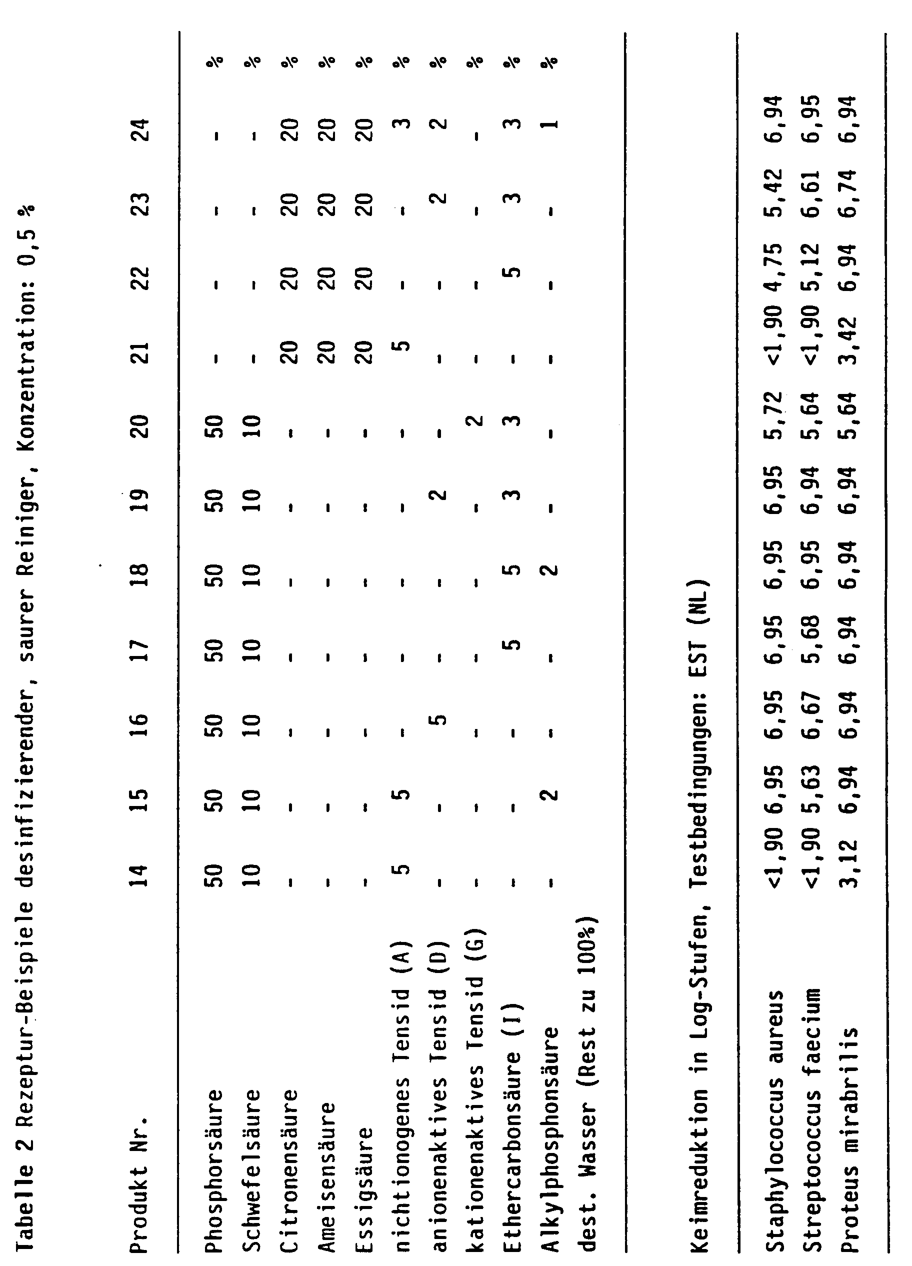

## Patentansprüche

1. Verwendung von Ethercarbonsäuren der allgemeinen Formel R-(OC₂H₄)ₙ-OCH₂COOH, in der R einen Alkylrest mit 4 bis 10 Kohlenstoffatomen und n 2 bis 8 sein kann, als keimtötende Substanzen in wäßrigen sauren Medien.

2. Verwendung gemäß Anspruch 1, dadurch gekennzeichnet, daß der Gehalt an Ethercarbonsäuren in den sauren Medien 0,05 - 50 Gew.-%, vorzugsweise 1 - 10 Gew.-% beträgt.

3. Verwendung gemäß Anspruch 1 und 2, dadurch gekennzeichnet, daß die sauren Medien zu 1 - 99 Gew.-%, vorzugsweise zu 50 - 90 Gew.-% aus anorganischen oder organischen Säuren oder deren Mischungen bestehen.

4. Verwendung gemäß Anspruch 1 bis 3, dadurch gekennzeichnet, daß die wäßrigen sauren Medien 0,05 - 50 Gew.-%, vorzugsweise 1 - 10 Gew.-% einer zusätzlichen Desinfektionskomponente enthalten.

5. Verwendung gemäß Anspruch 4, dadurch gekennzeichnet, daß die zusätzlichen Desinfektionskomponenten ausgewählt sind aus der Gruppe der quartären Ammoniumverbindungen, anionaktiven Tensiden, sauerstoffabspaltenden Mitteln, Alkylphosphonsäuren

6. Verwendung gemäß Anspruch 1 bis 5, dadurch gekennzeichnet, daß die sauren Medien zusätzlich noch Tenside enthalten.

7. Verwendung gemäß Anspruch 6, dadurch gekennzeichnet, daß die Menge an Tensiden 0,5 - 20 Gew.-%, vorzugsweise 1 - 10 Gew.-% beträgt.

8. Verwendung gemäß Anspruch 6 bis 7, dadurch gekennzeichnet, daß die Tenside nichtionogene Tenside sind.

9. Verwendung gemäß Anspruch 6 bis 8, dadurch gekennzeichnet, daß das Mischungsverhältnis im Gew.-% von Ethercarbonsäuren zu nichtionischen Tensiden im Bereich von 1 : 10 bis 10 : 1, vorzugsweise von 1 : 2 bis 2 : 1 liegt.

10. Verwendung gemäß Anspruch 1 bis 9, dadurch gekennzeichnet, daß die Anwendungslösung 0,0005 - 5, vorzugsweise 0,01 - 1 Gew.-% der Ethercarbonsäuren enthält.

11. Verwendung gemäß Anspruch 1 bis 10, dadurch gekennzeichnet, daß die Anwendungslösung 0,1 - 20, vorzugsweise 0,5 - 5 Gew.-% der organischen oder anorganischen Basissäure beträgt.

## Claims

1. The use of ether carboxylic acids corresponding to the general formula
R-(OC₂H₄)ₙ-OCH₂COOH
in which R may be an alkyl radical containing 4 to 10 carbon atoms and n may be a number of 2 to 8, as germicidal substances in aqueous acidic media.

2. The use claimed in claim 1, characterized in that the content of ether carboxylic acids in the acidic media is 0.05 to 50% by weight and preferably 1 to 10% by weight.

3. The use claimed in claims 1 and 2, characterized in that 1 to 99% by weight and preferably 50 to 90% by weight of the acidic media consist of inorganic or organic acids or mixtures thereof.

4. The use claimed in claims 1 to 3, characterized in that the aqueous acidic media contain 0.05 to 50% by weight and preferably 1 to 10% by weight of an additional disinfecting component.

5. The use claimed in claim 4, characterized in that the additional disinfecting components are selected from the group of quaternary ammonium compounds, anionic surfactants, oxygen-yielding compounds, alkylphosphonic acids.

6. The use claimed in claims 1 to 5, characterized in that the acidic media additionally contain surfactants.

7. The use claimed in claims 1 to 6, characterized in that the quantity of surfactants is 0.5 to 20% by weight and preferably 1 to 10% by weight.

8. The use claimed in claims 6 to 7, characterized in that the surfactants are nonionic surfactants.

9. The use claimed in claims 6 to 8, characterized in that the mixing ratio in % by weight of ether carboxylic acids to nonionic surfactants is in the range from 1:10 to 10:1 and preferably in the range from 1:2 to 2:1.

10. The use claimed in claims 1 to 9, characterized in that the in-use solution contains 0.0005 to 5% by weight and preferably 0.01 to 1% by weight of the ether carboxylic acids.

11. The use claimed in claims 1 to 10, characterized in that the in-use solution contains 0.1 to 20% by weight and preferably 0.5 to 5% by weight of the organic or inorganic base acid.

## Revendications

1. Utilisation d'acides carboxyliques-éthers de formule générale R-(OC₂H₄)ₙ₋OCH₂COOH dans laquelle R peut être un radical alcoyle avec 4 à 10 atomes de carbone et n peut être 2 à 8, en tant que substances germicides dans des milieux aqueux acides.

2. Utilisation selon la revendication 1,
caractérisée en ce que
la teneur en acides carboxyliques-éthers, dans les milieux acides s'élève à 0,05-50 % en poids, de préférence à 1-10 % en poids.

3. Utilisation selon les revendications 1 et 2,
caractérisée en ce que
les milieux acides sont constitués pour 1 à 99 % de préférence pour 50 à 90 % en poids d'acides minéraux ou organiques ou de leurs mélanges.

4. Utilisation selon les revendications 1 à 3,
caractérisée en ce que
les milieux aqueux acides renferment de 0,05 à 50 % en poids, de préférence de 1 à 10 % en poids d'un composant désinfectant supplémentaire.

5. Utilisation selon la revendication 4,
caractérisée en ce que
les composants désinfectants supplémentaires sont sélectionnés dans le groupe des composés d'ammonium quaternaires, des agents tensioactifs à anions actifs, des agents qui dégagent de l'oxygène et des acides alcoyl-phosphoniques.

6. Utilisation selon les revendications 1 à 5,
caractérisée en ce que
les milieux acides contiennent en supplément encore des agents tensioactifs.

7. Utilisation selon la revendication 6,
caractérisée en ce que
la quantité d'agents tensioactifs s'élève à 0,5-20 % en poids, de préférence à 1-10 % en poids.

8. Utilisation selon les revendications 6 à 7,
caractérisée en ce que
les agents tensioactifs sont des agents tensioactifs non-ionogènes.

9. Utilisation selon les revendications 6 à 8,
caractérisée en ce que
le rapport du mélange en % en poids des acides carboxyliques-éthers aux agents tensioactifs non ioniques, se situe dans la zone de 1:10 à 10:1, de préférence de 1:2 à 2:1.

10. Utilisation selon les revendications 1 à 9,
caractérisée en ce que
la solution d'utilisation renferme de 0,0005 à 5, de préférence de 0,01 à 1 % en poids d'acides carboxyliques-éthers.

11. Utilisation selon les revendications 1 à 10,
caractérisée en ce que
la solution d'utilisation s'élève à 0,1-20, de préférence à 0,5-5 % en poids, de l'acide de base organique ou minéral.
